# EUROPÄISCHE PATENTSCHRIFT

(11) **EP 2 423 185 B1**
(45) Veröffentlichungstag und Bekanntmachung des Hinweises auf die Patenterteilung: **01.03.2017**
(21) Anmeldenummer: 11177348.7
(22) Anmeldetag: 12.08.2011
(51) Int. Cl.: C07C 267/00, C08K 5/29, C09J 161/12, C08J 5/06, D06M 15/41, C08L 61/12

(54) **NEUARTIGE WÄSSRIGE RESORCIN-FORMALDEHYD-LATEX-DISPERSIONEN, HAFTUNGSVERBESSERTE FASERN, VERFAHREN ZU DEREN HERSTELLUNG UND DEREN VERWENDUNG**
NEW AQUEOUS RESORCINOL-FORMALDEHYDE-LATEX DISPERSIONS, FIBERS WITH IMPROVED ADHESION, PROCESS FOR THEIR PREPARATION AND USE THEREOF.
NOUVELLES DISPERSIONS RESORCINOL-FORMALDÉHYDE-LATEX, FIBRES AVEC ADHÉRENCE AMÉLIORÉE, LEUR PROCÉDÉ DE PRÉPARATION ET LEUR APPLICATION.

(30) Priorität: 30.08.2010 EP 10174548; 28.10.2010 EP 10189268; 22.11.2010 EP 10192089; 18.03.2011 EP 11158814
(43) Veröffentlichungstag der Anmeldung: 29.02.2012
(73) Patentinhaber: Rhein Chemie Rheinau GmbH, 68219 Mannheim (DE)
(72) Erfinder: Laufer, Wilhelm, 67158 Ellerstadt (DE); Blaul, Anke, 64297 Darmstadt (DE); Eckert, Armin, 68794 Oberhausen-Rheinhausen (DE); Fruth, Andrea, 65189 Wiesbaden (DE); Cano Sierra, Ana Maria, 69117 Heidelberg (DE)
(74) Vertreter: Siegers, Britta

(56) Entgegenhaltungen:
- US-A- 3 661 623
- US-A- 4 159 363
- US-A- 4 477 619
- US-A- 5 498 747

## Beschreibung

Die vorliegenden Erfindung betrifft neuartige wässrige Resorcin-Formaldehyd-Latex-Dispersionen, haftungsverbesserte Fasern, Verfahren zu deren Herstellung und deren Verwendung zur Haftungsverbesserung im Reifen.

Carbodiimide werden häufig zur Behandlung von Reifencords eingesetzt, siehe US-A-3867181 und DE-A-1770495 und US3661623.

Diese Behandlungen werden zur Verbesserung der Hydrolysestabilität von PET-Fasern durchgeführt. In DE-A-2326540 werden Polyisocyanate, die Polycarbodiimide beinhalten, beschrieben. Diese Verfahren basieren jedoch auf unerwünschten organischen Lösemitteln und sind unwirtschaftlich.

Resorcin-Formaldehyd-Latex-Dispersionen (RFL-Dip) haben sich insbesondere im Reifenbereich durchgesetzt, da diese die Haftung des Kunststoffgewebes (Cord) zum Gummi verbessern.

Im Fall von Polyester als Cord-Material besteht jedoch der Nachteil, dass die haftungsvermittelnden Eigenschaften des RFL-Dips nicht ausreichend sind.

Es wurde daher versucht, durch Zugabe von dimeren Isocyanaten diesen Nachteil zu beseitigen, was allerdings an der geringen Performance und der geringere Lagerstabilität scheiterte.

Um die Haftung bei der Verwendung von Polyester-Cord zum Reifen/Gummi zu verbessern werden dem RFL-Dip mit Caprolactamen geblockte Isocyanate zugesetzt (siehe US A 20080300347). Diese haben wiederum den Nachteil, dass im weiteren Prozess toxische monomere Isocyanate abgespalten werden.

Des Weiteren ist aus EP-A 2159241 der Einsatz von mikroverkapseltem dimerem Diphenylmethan-4,4'-diisocyanat und Diphenylmethan-2,4-diisocyanat (MDI) zur Verbesserung der haftungsvermittelnden Eigenschaften bekannt. Die hier beschriebenen Substanzen haben jedoch die Nachteile, dass diese teuer und kommerziell nicht verfügbar sind und ebenfalls toxische monomere Diisocyanate abspalten können.

Aufgabe der vorliegenden Erfindung war daher, wässrige Resorcin-Formaldehyd-Latex-Dispersionen bereitzustellen, die zur Verbesserung der Haftung einsetzbar sind und die Nachteile des Standes der Technik nicht aufweisen.

Überraschenderweise wurde nun gefunden, dass neuartige wässrige Resorcin-Formaldehyd-Latex-Dispersionen, enthaltend bestimmte Carbodiimide eine exzellente Haftung des Kunststoffgewebes (Cord) zum Gummi gewährleisten. Diese haben den Vorteil, dass diese bei der Verarbeitung im weiteren Prozess, keine giftige monomere Isocyanate abspalten und durch einfache Produktionsverfahren hergestellt werden können.

Gegenstand der vorliegenden Erfindung sind daher wässrige Resorcin-Formaldehyd-Latex-Dispersionen, enthaltend mindestens ein Carbodiimid auf Basis von Verbindungen der Formel (I)

R'-(-N=C=N-R-)ₘ-R" (I),

in der
m einer ganzen Zahl von 1 bis 500, bevorzugt von 1 bis 20 entspricht,
R = C₁-C₁₈-Alkylen, C₅-C₁₈-Cycloalkylen, Arylen und/oder C₇-C₁₂- Aralkylen,
R' = R-NCO, R-NHCONHR¹, R-NHCONR¹R², R-NHCOOR³ oder R-NHCO-R⁵ und
R"= -NCO, -NHCONHR¹, -NHCONR¹R², -NHCO-R⁵ oder -NHCOOR³ ist,
wobei in R' unabhängig voneinander R¹ und R² gleich oder verschieden sind und einen C₁-C₆-Alkyl-, C₆-C₁₀-Cycloalkyl- oder C₇-C₁₂-Aralkylrest darstellen und R³ eine der Bedeutungen von R¹ hat oder einen Polyester- oder einen Polyamidrest oder -(CH₂)₁-(O-(CH₂)ₖ-O)_{g}-R⁴, -C₆H₄(OH) oder - C₆H₃(OH)-((CH₂)ₕ-C₆H₄(OH))_{y},
und R⁵ = Epoxid, Phenol, Oxim, Resorcin, Polyethylenglykole und/oder Lactam, bevorzugt Caprolactam,
mit 1= 1-3, k= 1-3, g = 0-12, h = 1-2 und y = 1-50
und
R⁴ H oder C₁-C₄-Alkyl bedeutet.

Ebenfalls einsetzbar sind auch Gemische von Carbodiiimiden der Formel (I), inklusive der entsprechenden Oligomere und/oder Polymere.

In einer besonders bevorzugten Ausführungsform der Erfindung entsprechen die Carbodiimide den Formeln (II bis V) 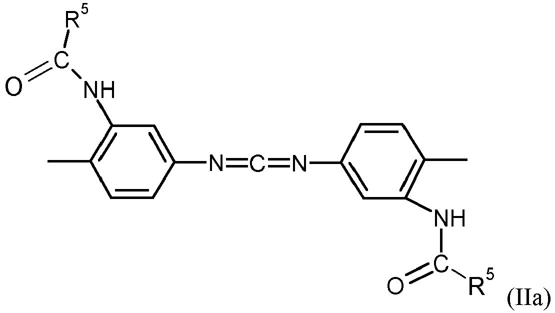 mit R⁵ = Epoxid, Phenol, Oxim, Resorcin, Polyethylenglykole und/oder Lactam, bevorzugt Caprolactam, 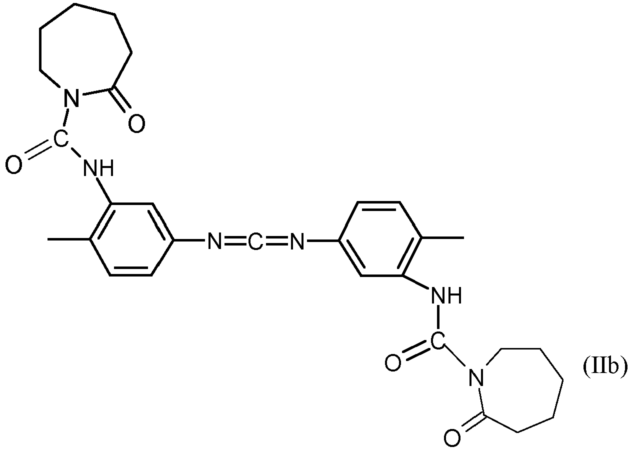 und/oder 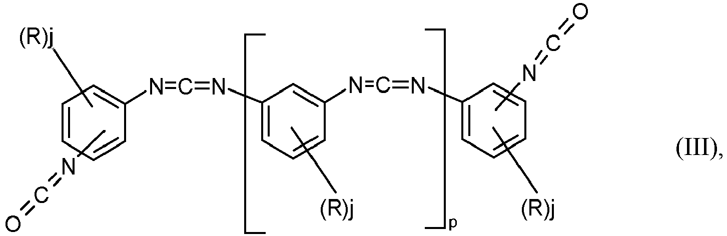
mit R = C₁-C₁₈-Alkylen, C₅-C₁₈-Cycloalkylen, Arylen und/oder C₇-C₁₂- Aralkylen und
j innerhalb des Moleküls gleich oder verschieden ist und 1 bis 5 bedeutet und
p = 0 bis 500,
und/oder sterisch gehinderte Carbodiimide der Formel (IV) 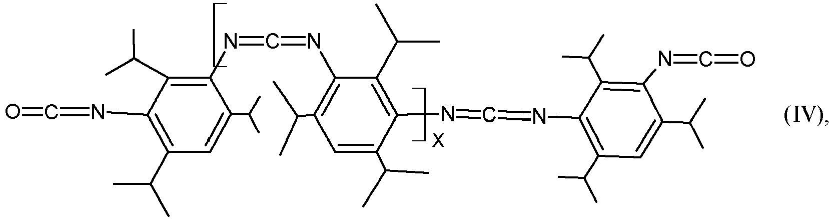 mit x = 1 bis 500, bevorzugt 1 bis 50
und/oder wasserlösliche Carbodiimide der Formel (V) 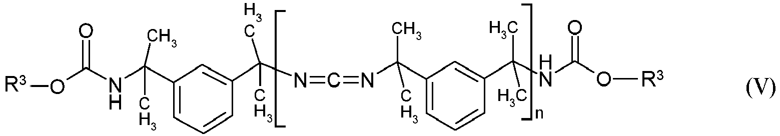
mit n = 1 bis 20, bevorzugt 1 bis 8,
und R³ =C₁-C₆-Alkyl-, C₆-C₁₀-Cycloalkyl- oder C₇-C₁₂-Aralkylrest oder einen Polyester- oder einen Polyamidrest oder -(CH₂)₁-(O-(CH₂)ₖ-O)_{g}-R⁴bedeutet,
mit 1= 1-3, k= 1-3, g = 0-12 und
R⁴= H oder C₁-C₄-Alkyl.

Herstellungsbedingt fallen die Carbodiimide häufig im Gemischen aus monomeren, oligomeren und/oder polymeren Carbodiimiden an. Diese Gemische sind vom Gegenstand der Erfindung mitumfasst.

Ebenfalls einsetzbar sind Verbindungen der Formeln (I) bis (IV), die geblockt sind z.B. mit Lactamen, besonders bevorzugt Caprolactam, Phenolen, Novolacken, Resorcin, Oxim, Polyethylenglykolen und/oder Epoxiden.

Der Rahmen der Erfindung erfasst alle oben stehenden und im Folgenden aufgeführten allgemeinen oder in Vorzugsbereichen genannten Restedefinitionen, Indizes, Parameter und Erläuterungen untereinander, also auch zwischen den jeweiligen Bereichen und Vorzugsbereichen in beliebiger Kombination.

Die Verbindungen nach Formel (I) bis (V) sind kommerziell erhältlich, z.B. bei der Firma Rhein Chemie Rheinau GmbH oder lassen sich nach den dem Fachmann geläufigen Verfahren herstellen, wie z.B. beschrieben in DE-A-11 30 594 oder US 2 840 589 oder durch die Kondensation von Diisocyanaten unter Abspaltung von Kohlendioxid bei erhöhten Temperaturen, z.B. bei 40 °C bis 200 °C, in Gegenwart von Katalysatoren. Als Katalysatoren haben sich z.B. starke Basen oder Phosphorverbindungen bewährt. Vorzugsweise werden Phospholenoxide, Phospholidine oder Phospholinoxide sowie die entsprechenden Sulfide verwendet. Ferner können als Katalysatoren tertiäre Amine, basisch reagierende Metallverbindungen, Carbonsäuremetallsalze und nicht basische Organometallverbindungen verwendet werden.

Zur Herstellung der eingesetzten Carbodiimide und/oder Polycarbodiimide eignen sich alle Diisocyanate, wobei im Rahmen der vorliegenden Erfindung bevorzugt Carbodiimide und/oder Polycarbodiimide verwendet werden, die auf C₁- bis C₄-Alkyl substituierten aromatischen Isocyanaten aufbauen, wie z.B. 2,4-Toluylendiisocyanat, 2,6-Toluylendiisocyanat, ein Gemisch aus 2,4-Toluylendiisocyanat und 2,6-Toluylendiisocyanat, Hexamethylendiisocyanat, Cyclohexan-1,4-diisocyanat, Xylylendiisocyanat, Isophorondiisocyanat, 2,6-Diisopropylphenylisocyanat, 2,4,6-Triisopropylphenyl-1,3-diisocyanat, 2,4,6-Triethylphenyl-1,3-diisocyanat, 2,4,6-Trimethylphenyl-1,3-diisocyanat, 2,4'-Diisocyanatodiphenylmethan, 3,3',5,5'-Tetraisopropyl-4,4'-diisocyanato-diphenylmethan, 3,3',5,5'-Tetraethyl-4,4'-di-isocyanatodiphenylmethan, Tetramethylxyloldiisocyanat, 1,5-Naphthalindiisocyanat, 4,4'-Diphenylmethandiisocyanat, 2,4'-Diphenyl-methandiisocyanat, 2,2'-Diphenylmethandiisocyanat, 4,4'-Diphenyldimethyl-methandiisocyanat, 1,3-Phenylendiisocyanat, 1,4-Phenylendiisocyanat, Dicyclohexylmethan-4,4'-diisocyanat, Dicyclohexylmethan-2,4'-diisocyanat, Dicyclohexylmethan-2,2'-diisocyanat, Methylcyclohexandiisocyanat, Tetramethylxylylendiisocyanat, 2,6-Diisopropylphenylen-isocyanat und 1,3,5-Triisopropylbenzol-2,4-diisocyanat oder deren Gemische, oder auf substituierten Aralkylen, wie 1,3-Bis-(1-methyl-1-isocyanato-ethyl)-benzol, basieren. Besonders bevorzugt ist es, wenn die Carbodiimide und/oder Polycarbodiimide auf 2,4-Toluylendiisocyanat und 2,6-Toluylendiisocyanat oder einem Gemisch aus 2,4-Toluylendiisocyanat und 2,6-Toluylendiisocyanat basieren.

In einer weiteren Ausführungsform der vorliegenden Erfindung ist es auch möglich, eine Mischung verschiedener Carbodiimide einzusetzen.

Die eingesetzten festen Carbodiimide weisen besonders bevorzugt eine Teilchengröße von < 50µm auf.

In einer Ausführungsform der Erfindung können die erfindungsgemäßen wässrigen Resorcin-Formaldehyd-Latex-Dispersionen noch weitere Zusatzstoffe enthalten, wie z.B. rheologische Hilfsmittel (Antiabsetzmittel), wie z.B. Borchi®Gel ALA (OMG Borchers GmbH) oder Kelzan® S, erhältlich bei der Firma Monsanto, oder auch Tragacanth, erhältlich bei der Firma R.T. Vanderbilt, Stabilisatoren, Emulgatoren, Netz- und/oder Dispergiermittel, wie z.B. Tamol® NN 9104 der Firma BASF AG oder Aerosol® OT45 der Firma Cytec Surface Specialities GmbH, Dispersogen® HR der Firma Clariant International Ltd.

Bei den Resorcin-Formaldehyd-Latex-Dispersionen im Sinne der Erfindung handelt es sich um mindestens eine Dispersion der Einzelkomponenten Resorcin und Formaldehyd und/oder Formaldehyd zusammen mit einem Vorkondensat aus Resorcin und Formaldehyd (z.B. Rhenosin® T der Firma Rhein Chemie Rheinau GmbH und Penacolite® 50 erhältlich bei der Firma Indspec Chemical Corp.) und einer oder mehreren der nachstehend genannten Latex-Dispersion.

Als Latex-Dispersion im Sinne der Erfindung kommen alle im Stand der Technik bekannten Latices in Frage, wie z.B. XSBR-Latex (carboxylierte Styrol-Butadien-Copolymere), HS-SBR-Latex (Styrol-Butadien-Copolymere), Nitril-Butadien-Copolymere (NBR-Latex), CR-Latex (Polychloropren), PSBR-Latex (Pyridin-Styrol-Butadien-Copolymere) und/oder Acrylat-Latex (Reinacrylat- und Styrol-Acrylat-Copolymere) und/oder Styrol-Butadien-Vinylpyridin-Copolymer-Latices, wobei Styrol-Butadien-Vinylpyridin-Copolymer-Latices (z.B. Pliocord VP 106, erhältlich bei der Firma Eliochem) bevorzugt sind. Dabei handelt es sich um handelsübliche Substanzen, die z.B. erhältlich sind bei der Polymer Latex GmbH oder der Firma Eliokem.

Die Resorcin-Formaldehyd-Latex-Dispersion wird dabei vorzugsweise durch Einrühren einer basischen wässrigen Mischung aus Resorcin und Formaldehyd oder vorzugsweise einer basischen wässrigen Mischung aus Formaldehyd und dem Vorkondensat aus Resorcin und Formaldehyd in einer basischen wässrigen Latexmischung erhalten.

Das Verhältnis von Resorcin zu Formaldehyd beträgt vorzugsweise 1:1 bis 2,5: 1.

Das Verhältnis von Latex, bezogen auf dessen Festkörperanteil, zu dem Kondensat aus Resorcin und Formaldehyd liegt vorzugsweise bei 10:1 bis 4: 1, besonders bevorzugt 6:1.

Bei den eingesetzten wässrigen basischen Lösungen handelt es sich vorzugsweise um wässrige Natrium-Hydroxid- und/oder Ammonium-Hydroxid-Lösungen. Dabei sind pH-Werte von 10 - 11 bevorzugt.

Die Carbodiimide werden dabei vorzugsweise in Mengen von 0,5 bis 10 %, besonders bevorzugt 5-8 %, bezogen auf den Feststoffanteil in der Resorcin-Formaldehyd-Latex-Dispersion, eingesetzt.

Gegenstand der vorliegenden Erfindung ist zudem ein Verfahren zur Herstellung der erfindungsgemäßen Resorcin-Formaldehyd-Latex-Dispersionen, wonach mindestens eine der Verbindungen der Formel (I) bis (V) in Substanz oder in Form einer wässrigen Dispersion in die Resorcin-Formaldehyd-Latex-Dispersion eingerührt wird

Die wässrige Dispersion der Verbindungen der Formel (I) bis (V) entstehen dabei vorzugsweise durch Einrühren der Verbindungen der Formel (I) bis (V), gegebenenfalls unter Zugabe von weiteren Additiven, wie z. B. rheologische Hilfsmittel (Antiabsetzmittel), wie z. B. Borchi®Gel ALA (OMG Borchers GmbH) oder Kelzan® S, erhältlich bei der Firma Firma Monsanto, oder auch Tragacanth, erhältlich bei der Firma R.T. Vanderbilt, Stabilisatoren, Emulgatoren, Netz- und/oder Dispergiermittel, wie z.B. Tamol® NN 9104 der Firma BASF AG oder Aerosol® OT45 der Firma Cytec Surface Specialities GmbH, Dispersogen® HR der Firma Clariant International Ltd. in Wasser.

Die Anteile an Carbodiimden in der vorgenannten wässrigen Dispersion betragen vorzugsweise 1-80 %, besonders bevorzugt 40 - 60%.

Für den Rühr-/Vermahlprozess können handelsübliche Maschinen eingesetzt werden, wie z.B. Perlmühle, Dissolver und/oder Blattrührer.

Gegenstand der vorliegenden Erfindung sind zudem Haftmittelformulierungen, enthaltend mindestens eine erfindungsgemäße wässrige Resorcin-Formaldehyd-Latex-Dispersion und zusätzlich ein Aktivierungsmittel.

Aktivierungsmittel im Sinne der Erfindung sind z.B. Epoxide, wie Glycidylether GE 500 der Firma Raschig, Bisphenol A Epoxynovolac der Firma Editya Birla Chemical etc..

Zur Herstellung der Haftmittelformulierungen werden dabei vorzugsweise die erfindungsgemäßen mindestens ein Aktivierungsmittel in die Resorcin-Formaldehyd-Latex-Dispersion eingerührt, wobei eine andere Dosierreihenfolge nicht ausgeschlossen ist.

Gegenstand der vorliegenden Erfindung ist zudem Verfahren zur Verbesserung der Haftung von Verstärkungsfasern auf vernetztem Kautschuk oder Elastomeren, wonach die Verstärkungsfasern (Fasern, Cord) in die erfindungsgemäße Haftmittelformulierung eingebracht und anschließend getrocknet werden oder
die Verstärkungsfasern (Fasern, Cord) in ein oder mehreren Schritten mit einem und/oder mehreren der Bestandteilen der erfindungsgemäßen Haftmittelformulierung behandelt werden.

Insbesondere bei der letztgenannten Behandlung in mehreren Schritten mit zunächst einem und/oder mehreren Bestandteilen der erfindungsgemäßen Haftmittelformulierung, kann die Faser zwischenzeitlich auch getrocknet werden.

Sofern das vorgenannte erfindungsgemäße Verfahren in mehreren Schritten mit einem oder mehreren Bestandteilen der erfindungsgemäßen Haftmittelformulierung durchgeführt wird, sind beispielsweise folgende Ausführungsformen möglich:
So kann beispielsweise die Verstärkungsfaser zunächst in mindestens ein Epoxid eingebracht, gegebenenfalls getrocknet, und anschließend in die erfindungsgemäße Resorcin-Formaldehyd-Latex-Dispersion eingebracht werden, oder
die Verstärkungsfaser wird zunächst in eine Dispersion aus mindestens einem Epoxid und mindestens einem Carbodiimid der Formeln (I) bis (V) eingebracht, gegebenenfalls getrocknet, und anschließend in eine Latex-Dispersion, die auch Resorcin und Formaldehyd oder Formaldehyd und ein Resorcin-Formaldehyd-Vorkondensat enthält, eingebracht.

Bei dem vernetzten Kautschuk oder Elastomeren handelt es sich dabei vorzugsweise um (SBR-Styrol-Butadien-Kautschuk, (BR-) Butadien-Kautschuk, (NR-) Naturkautschuk, (IR-) synthetischer Naturkautschuk, Polyurethan-Elastomere oder Mischungen hieraus.

In den vorgenannten Fällen können sowohl voraktivierte (vorbehandelte), als auch nicht voraktivierte Verstärkungsfasern eingesetzt werden.

Bei den voraktivierten (vorbehandelten) Verstärkungsfasern handelt es sich um z.B. polyester- oder aramidbasierte Fasern, die während ihrer Herstellung (Spinnen) mit einer Schlichte behandelt wurden. Kommerziell erhältliche Produkte sind z.B. bei der Firma KoSa unter KoSa Type 793 und KoSa Type 748. Die Schlichten enthalten in vielen Fällen Epoxide.

Bei den nicht-vorbehandelten Verstärkungsfasern handelt es sich um z.B. polyester- oder aramidbasierte Fasern. Kommerziell erhältliche Produkte sind z.B. KoSa Type 792.

Ebenfalls mitumfasst von dieser Erfindung ist auch ein Verfahren zur Verbesserung der Haftung von Verstärkungsfasern auf vernetztem Kautschuk oder Elastomeren, wonach voraktivierte (vorbehandelte) Verstärkungsfasern in die erfindungsgemäße wässrige Resorcin-Formaldehyd-Latex-Dispersion eingebracht und anschließend getrocknet werden.

Unter dem Begriff Fasern werden im Sinne der Erfindung neben Fasern auch Garne, Cords, als auch Verstärkungsgewebe verstanden, auf Basis von z.B. Polyester oder Aramid, wie u.a. Polyethylenterephthalat-basierte Fasern.

Gegenstand der vorliegenden Erfindung sind zudem haftungsverbesserte Fasern, erhältlich durch Inkontaktbringen der mit Aktivierungsmittel vorbehandelten Fasern mit mindestens einer erfindungsgemäßen wässrigen Resorcin-Formaldehyd-Latex-Dispersion oder durch Inkontaktbringen einer nicht-vorbehandelten Faser mit mindestens einer erfindungsgemäßen Haftmittelformulierung, und einer anschließenden Trocknung (Fixierung) bei Temperaturen von 180 - 260 °C.

Gegenstand der vorliegenden Erfindung ist zudem die Verwendung der erfindungsgemäßen Resorcin-Formaldehyd-Latex-Dispersion gegebenenfalls in Anwesenheit von Aktivierungsmitteln zur Verbesserung der Haftfestigkeit zwischen Verstärkungsfasern und Elastomeren in Reifen, Antriebsriemen, Transportbändern und/oder Schläuchen.

Die nachfolgenden Beispiele dienen der Erläuterung der Erfindung, ohne dabei limitierend zu wirken.

### Ausführungsbeispiele:

### Verwendete Chemikalien:

TDI-Carbodiimid, ein Carbodiimid gemäß Formel (IIb),
Addolink® CBM, Caprolactamblockiertes MDI (4,4-Diphenylmethandiisocyanat), erhältlich bei der Fa. Rhein Chemie Rheinau GmbH,
Aerosol® OT 75, Netz/Dispergiermittel, erhältlich bei der Firma Cytec Surface Specialties GmbH,
Kelzan® S, Antiabsetzmittel, erhältlich bei der Firma Monsanto,
Penacolite® 50, ein Resorcin-Formaldehyd-Vorkondensat, erhältlich bei der Firma Indspec Chemical Corp sowie
Pliocord® VP 106, ein Styrol-Butadien-Vinylpyridin-Copolymer-Latex mit 41 % Feststoffanteil, erhältlich bei der Firma Eliokem.

Tabelle 1 fasst die Einsatzmengen zur Herstellung einer wässrigen Dispersion zusammen:

**Tabelle 1:**

| **Material** | **Bsp. 1** | **Bsp. 2** |
|---|---|---|
| TDI-Carbodümid | 100 | |
| Addolink ® CBM | | 100 |
| Aerosol® OT 75 | 2,4 | 2,4 |
| Wasser | 91 | 91 |
| Kelzan® S, 3% in Wasser | 9 | 9 |

Die Einsatzmengen sind in Gew. Teilen angegeben.

Die wässrige Dispersionen wurden dabei wie folgt hergestellt:
Wasser und Netz/Dispergiermittel (Aerosol® OT 75) wurden zusammengegeben und gelöst/gemischt. Anschließend wurde TDI-Carbodiimid, bzw. Addolink® CBM zugesetzt und im Dissolver homogenisiert. Danach wurde die frisch hergestellte Kelzan® S-Präparation eingemischt und homogenisiert.

Tabelle 2 gibt die Zusammensetzungen von Haftmittelformulierungen zur Behandlung von voraktivierten Polyesterfasern wieder:

**Tabelle 2:**

| **Material** | **Bsp. 3 (erf)** | **Bsp. 4 (VV)** | **Bsp. 5 (VV)** |
|---|---|---|---|
| wässrige TDI-Carbodimid-Dispersion gemäß Bsp. 1 | 28 | | |
| wässrige Addolink® CBM-Dispersion gemäß Bsp. 2 | | 28 | |
| Wasser | 367,3 | 367,3 | 395,3 |
| Natronlauge (10 % -ig) | 6 | 6 | 6 |
| Penacolite® 50 | 42,4 | 42,4 | 42,4 |
| Formaldehyd (37 %-ig) | 20,5 | 20,5 | 20,5 |
| Pliocord VP 106 | 411 | 411 | 411 |
| Ammoniak (25 %-ig) | 24,7 | 24,7 | 24,7 |

| | | | |
|---|---|---|---|
| VV= Vergleichsbeispiel, erf= erfindungsgemäß; die Einsatzmengen sind in Gew. Teilen angegeben. | | | |

Die Vortrocknung der behandelten Fasern erfolgte bei ca. 135 °C für ca. 60 s, die Fixierung bei 230 °C für 120 s.

Vulkanisierung und Haftungsprüfung wurden nach ASTM D4393 durchgeführt. Als Testelastomermischung kam Dunlop SP 5320, erhältlich bei der Firma Dunlop, und ein aktiviertes PET-Gam zur Anwendung.

Die Ergebnisse der Haftprüfung werden in Tabelle 3 zusammengefasst:

**Tabelle 3:**

| **Test** | **Einheit** | **Beispiele** | | |
|---|---|---|---|---|
| | | **TDI-Carbodiimid (Bsp. 3)** | **Addolink CBM (Bsp. 4)** | **ohne Haftvermittler (Bsp. 5)** |
| Streifen-Test (Haftung) | N/2,5cm | 250 - 300 | 250 - 300 | 200-250 |

Aus den Versuchen ist klar ersichtlich, dass die erfindungsgemäßen Resorcin-Formaldehyd Latex-Dispersionen eine extrem gute Haftung zeigen und dabei im Vergleich zum Stand der Technik deutlich leichter herstellbar und damit wirtschaftlicher sind und zudem bei der Trocknung im Rahmen der Thermofixierung keine giftigen momeren Isocyanate abspalten. Damit weisen die erfindungsgemäßen Haftvermittler ökologisch und arbeitstechnisch gegenüber den im Stand der Technik bekannten Verbindungen deutliche Vorteile auf.

## Patentansprüche

1. Wässrige Resorcin-Formaldehyd-Latex-Dispersion, enthaltend mindestens ein Carbodiimid auf Basis von Verbindungen der Formel (I)
R'-(-N=C=N-R-)ₘ-R" (I),
in der
m einer ganzen Zahl von 1 bis 500 entspricht,
R = C₁-C₁₈-Alkylen, C₅-C₁₈-Cycloalkylen, Arylen und/oder C₇-C₁₂- Aralkylen,
R' = R-NCO, R-NHCONHR¹, R-NHCONR¹R², R-NHCOOR³ oder R-NHCO-R⁵ und
R"= -NCO, -NHCONHR¹, -NHCONR¹R², -NHCO-R⁵, oder -NHCOOR³ ist,
wobei in R' unabhängig voneinander R¹ und R² gleich oder verschieden sind und einen C₁-C₆-Alkyl-, C₆-C₁₀-Cycloalkyl- oder C₇-C₁₂-Aralkylrest darstellen und R³ eine der Bedeutungen von R¹ hat oder einen Polyester- oder einen Polyamidrest oder -(CH₂)₁-(O-(CH₂)ₖ-O)_{g}-R⁴, -C₆H₄(OH) oder -C₆H₃(OH)-((CH₂)ₕ-C₆H₄(OH))_{y},
und R⁵ = Epoxid, Phenol, Oxim, Resorcin, Polyethylenglykole und/oder Lactam, bevorzugt Caprolactam,
mit 1= 1-3, k= 1-3, g = 0-12, h = 1-2 und y = 1-50 bedeutet,
und
R⁴ = H oder C₁-C₄-Alkyl.

2. Wässrige Resorcin-Formaldehyd-Latex-Dispersion, nach Anspruch 1, **dadurch gekennzeichnet, dass** es sich bei dem Carbodiimid um Verbindungen der Formeln 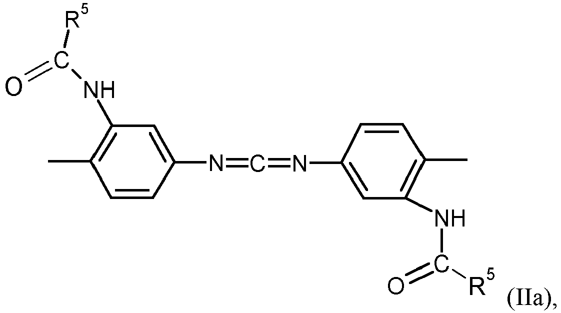 mit R⁵ = Epoxid, Phenol, Oxim, Resorcin, Polyethylenglykole und/oder Lactam, bevorzugt Caprolactam, 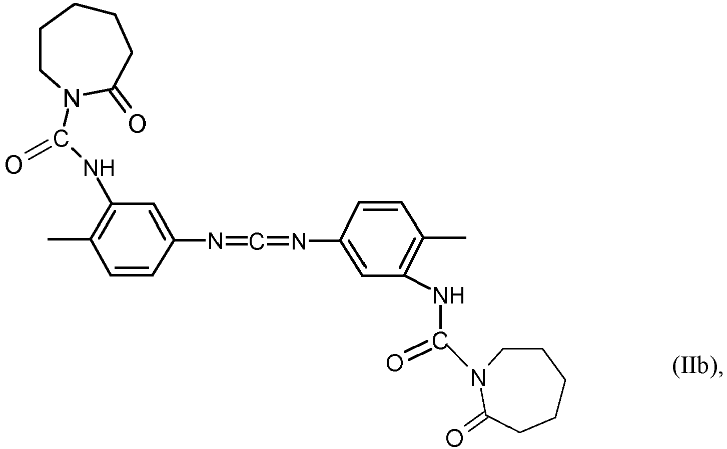 und/oder 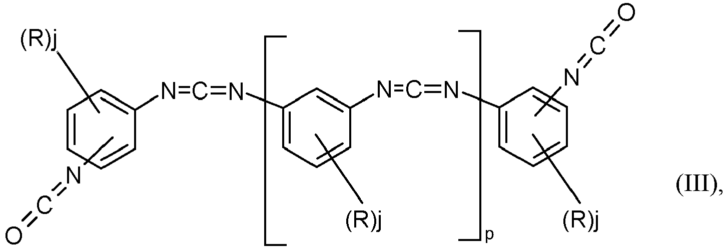 mit R = C₁-C₁₈-Alkylen, C₅-C₁₈-Cycloalkylen-, Arylen und/oder C₇-C₁₂- Aralkylen und j innerhalb des Moleküls gleich oder verschieden ist und 1 bis 5 bedeutet und mit p = 0 bis 500, 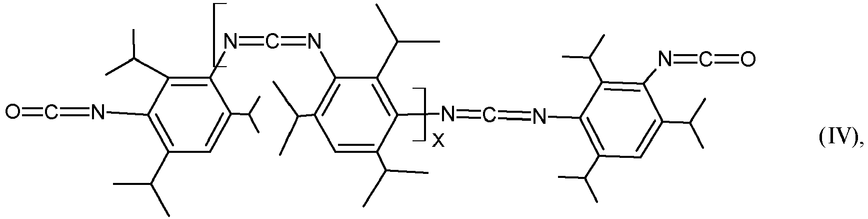 mit x = 1 bis 500, und/oder 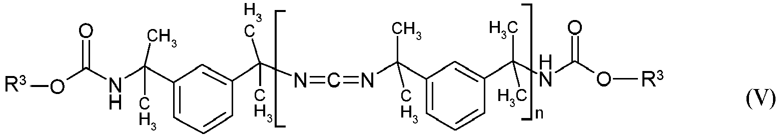
mit n = 1 bis 20;
und R³ = C₁-C₆-Alkyl-, C₆-C₁₀-Cycloalkyl- oder C₇-C₁₂-Aralkylrest, einen Polyester- oder Polyamidrest oder -(CH₂)₁(O-(CH₂)ₖ-O)_{g}-R⁴ bedeutet,
mit 1= 1-3, k= 1-3, g = 0-12 und
R⁴= H oder C₁-C₄-Alkyl, handelt.

3. Wässrige Resorcin-Formaldehyd-Latex-Dispersion nach Anspruch 1 oder 2, **dadurch gekennzeichnet, dass** es sich bei der Resorcin-Formaldehyd-Latex-Dispersion um eine Dispersion der Einzelkomponenten Resorcin und Formaldehyd und/oder Formaldehyd zusammen mit einem Vorkondensat aus Resorcin und Formaldehyd und einer oder mehreren der Latex-Dispersionen, ausgewählt aus der Gruppe: carboxylierte Styrol-Butadien-Copolymere (XSBR-Latex), Nitril-Butadien-Copolymere (NBR-Latex), Polychloropren (CR-Latex), Pyridin-Styrol-Butadien-Copolymere (PSBR-Latex) und/oder Reinacrylat- und/oder Styrol-Acrylat-Copolymere (Acrylat-Latex) und/oder Styrol-Butadien-Vinylpyridin-Copolymer-Latices, handelt.

4. Verfahren zur Herstellung von wässrigen Resorcin-Formaldehyd-Latex-Dispersionen nach einem oder mehreren der Ansprüche 1 bis 3, **dadurch gekennzeichnet, dass** mindestens ein Carbodiimid nach einem oder mehreren der Ansprüche 1 bis 3 in die Resorcin-Formaldehyd-Latex-Dispersion eingerührt wird.

5. Haftmittelformulierung, enthaltend eine wässrige Resorcin-Formaldehyd-Latex-Dispersion nach einem oder mehreren der Ansprüche 1 bis 3 und zusätzlich mindestens ein Aktivierungsmittel.

6. Haftmittelformulierung nach Anspruch 5, **dadurch gekennzeichnet, dass** das Aktivierungsmittel mindestens ein Epoxid ist.

7. Verfahren zur Verbesserung der Haftung von Verstärkungsfasern mit vernetztem Kautschuk und/oder Elastomeren, **dadurch gekennzeichnet, dass**
- die Fasern in eine Haftmittelformulierung nach Anspruch 5 oder 6 eingebracht und anschließend getrocknet werden oder
- die Fasern in ein oder mehreren Schritten mit einem und/oder mehreren der Bestandteilen der Haftmittelformulierung nach Anspruch 5 oder 6 behandelt werden.

8. Verfahren zur Verbesserung der Haftung von Verstärkungsfasern mit vernetzten Kautschuken oder Elastomeren, **dadurch gekennzeichnet, dass** die voraktivierten Fasern in eine wässrige Resorcin-Formaldehyd-Latex-Dispersion nach einem oder mehreren der Ansprüche 1 bis 3 eingebracht und anschließend getrocknet werden.

9. Haftungsverbesserte Fasern, erhältlich durch Inkontaktbringen der mit Aktivierungsmittel vorbehandelten Fasern mit mindestens einer wässrigen Resorcin-Formaldehyd-Latex-Dispersion nach einem oder mehreren der Ansprüche 1 bis 3 oder durch Inkontaktbringen einer nicht-vorbehandelten Faser mit mindestens einer Haftmittelformulierung nach Anspruch 5 oder 6 und eine anschließenden Trocknung (Fixierung) bei Temperaturen von 180 bis 260 °C.

10. Verwendung der wässrige Resorcin-Formaldehyd-Latex-Dispersionen nach einem oder mehreren der Ansprüche 1 bis 3 gegebenenfalls in Anwesenheit von Aktivierungsmitteln zur Verbesserung der Haftfestigkeit zwischen Verstärkungsfasern und Elastomeren in Reifen, Antriebsriemen, Transportbändern und/oder Schläuchen.

## Claims

1. Aqueous resorcinol-formaldehyde-latex dispersion comprising at least one carbodiimide based on compounds of the formula (I)
R'-(-N=C=N-R-)ₘ-R" (I),
in which
m is an integer from 1 to 500,
R = C₁-C₁₈-alkylene, C₅-C₁₈-cycloalkylene-, arylene and/or C₇-C₁₂-aralkylene,
R' = R-NCO, R-NHCONHR¹, R-NHCONR¹R², R-NHCOOR³ or R-NHCO-R⁵ and
R"= -NCO, -NHCONHR¹, -NHCONR¹R², -NHCO-R⁵ or -NHCOOR³,
where R¹ and R² in R' are mutually independently identical or different and are a C₁-C₆-alkyl moiety, C₆-C₁₀-cycloalkyl moiety or C₇-C₁₂-aralkyl moiety, and R³ is as defined for R¹ or is a polyester moiety or a polyamide moiety or -(CH₂)₁-(O-(CH₂)ₖ-O)_{g}-R⁴, -C₆H₄(OH) or -C₆H₃(OH)-((CH₂)ₕ-C₆H₄(OH))_{y},
and R⁵ = epoxide, phenol, oxime, resorcinol, polyethylene glycols and/or lactam, preferably caprolactam,
where 1= from 1 to 3, k= from 1 to 3, g = from 0 to 12 , h = from 1 to 2 and y = from 1 to 50,
and
R⁴ = H or C₁-C₄-alkyl.

2. Aqueous resorcinol-formaldehyde-latex dispersion according to Claim 1, **characterized in that** the carbodiimide involves compounds of the formulae 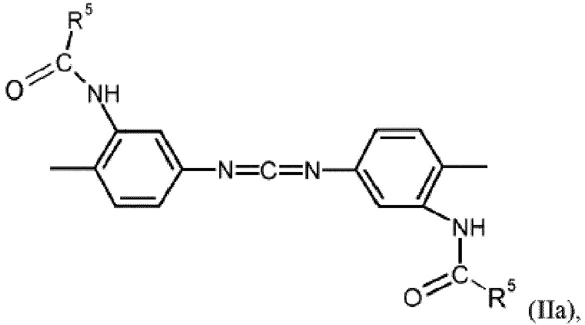 and R⁵ = epoxide, phenol, oxime, resorcinol, polyethylene glycols and/or lactam, preferably caprolactam, 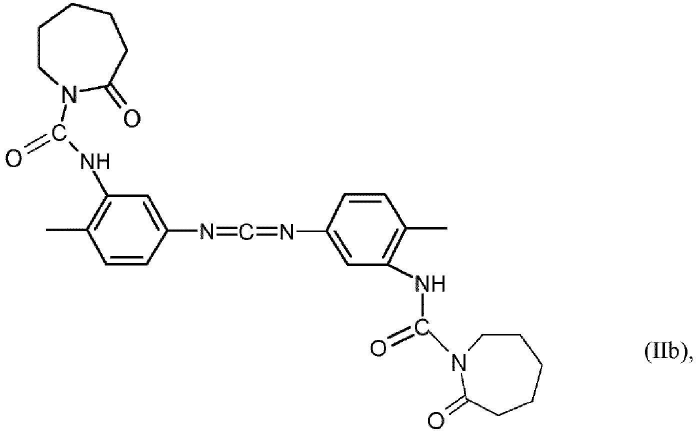 and/or 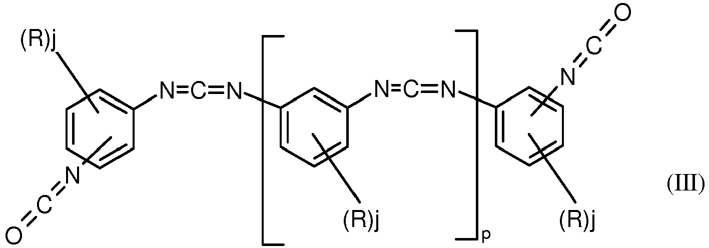 where R = C₁-C₁₈-alkylene, C₅-C₁₈-cycloalkylene-, arylene and/or C₇-C₁₂-aralkylene and j is identical or different within the molecule and is from 1 to 5, and with p = from 0 to 500, 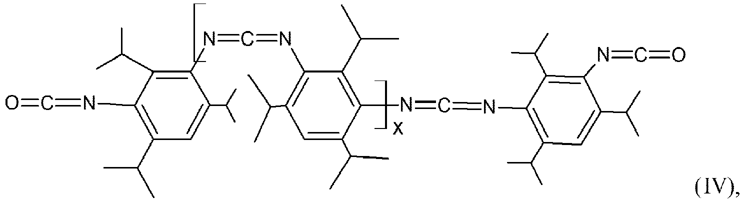 where x = from 1 to 500, and/or 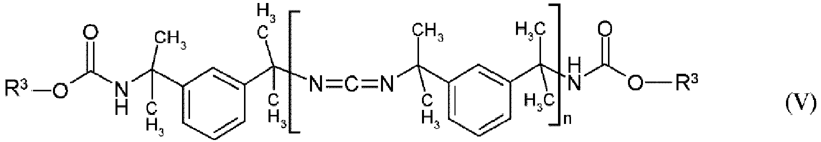
where n = from 1 to 20;
and R³ = C₁-C₆-alkyl moiety, C₆-C₁₀-cycloalkyl moiety or C₇-C₁₂-aralkyl moiety, a polyester moiety or polyamide moiety or -(CH₂)₁-(O-(CH₂)ₖ-O)_{g}-R⁴,
where 1= from 1 to 3, k = from 1 to 3, g = from 0 to 12 and
R⁴ = H or C₁-C₄-alkyl.

3. Aqueous resorcinol-formaldehyde-latex dispersion according to Claim 1 or 2, **characterized in that** the resorcinol-formaldehyde-latex dispersion involves a dispersion of the individual components resorcinol and formaldehyde, and/or formaldehyde together with a precondensate made of resorcinol and formaldehyde and of one or more of the latex dispersion selected from the following group: carboxylated styrene-butadiene copolymers (XSBR latex), nitrile-butadiene copolymers (NBR latex), polychloroprene (CR latex), pyridine-styrene-butadiene copolymers (PSBR latex) and/or acrylate-only copolymers and/or styrene-acrylate copolymers (acrylate latex) and/or styrene-butadiene-vinylpyridine copolymer latices.

4. Process for producing aqueous resorcinol-formaldehyde-latex dispersions according to one or more of Claims 1 to 3, **characterized in that** at least one carbodiimide according to one or more of Claims 1 to 3 is incorporated by stirring into the resorcinol-formaldehyde-latex dispersion.

5. Adhesive formulation, comprising an aqueous resorcinol-formaldehyde-latex dispersion according to one or more of Claims 1 to 3 and also at least one activator.

6. Adhesive formulation according to Claim 5, **characterized in that** the activator is at least one epoxide.

7. Process for improving the adhesion of reinforcement fibres to crosslinked rubber and/or elastomers, **characterized in that**
- the fibres are introduced into an adhesive formulation according to Claim 5 or 6 and are then dried, or
- the fibres are treated in one or more steps with one or more of the constituents of the adhesive formulation according to Claim 5 or 6.

8. Process for improving the adhesion of reinforcement fibres to crosslinked rubbers or elastomers, **characterized in that** the preactivated fibres are introduced into an aqueous resorcinol-formaldehyde-latex dispersion according to one or more of Claims 1 to 3 and are then dried.

9. Adhesion-improved fibres, obtainable by bringing the activator-pretreated fibres into contact with at least one aqueous resorcinol-formaldehyde-latex dispersion according to one or more of Claims 1 to 3, or by bringing a non-pretreated fibre into contact with at least one adhesive formulation according to Claim 5 or 6, and subsequent drying (setting) at temperatures of from 180 to 260°C.

10. Use of the aqueous resorcinol-formaldehyde-latex dispersions according to one or more of Claims 1 to 3 optionally in the presence of activators to improve the bond strength between reinforcement fibres and elastomers in tyres, drive belts, conveyor belts and/or hoses.

## Revendications

1. Dispersion aqueuse de résorcine-formaldéhyde-latex, contenant au moins un carbodiimide à base de composés de formule (I)
R'-(-N=C=N-R-)ₘ-R" (I)
dans laquelle
m correspond à un nombre entier de 1 à 500,
R = alkylène en C₁-C₁₈, cycloalkylène en C₅-C₁₈, arylène et/ou aralkylène en C₇-C₁₂,
R' = R-NCO, R-NHCONHR¹, R-NHCONR¹R², R-NHCOOR³ ou R-NHCO-R⁵, et R" = -NCO, -NHCONHR¹, -NHCONR¹R², -NHCO-R⁵ ou -NHCOOR³,
R¹ et R² dans R' étant indépendamment l'un de l'autre identiques ou différents, et représentant un radical alkyle en C₁-C₆, cycloalkyle en C₆-C₁₀ ou aralkyle en C₇-C₁₂, et R³ ayant une des significations de R¹ ou représentant un radical polyester ou polyamide ou -(CH₂)₁-(O-(CH₂)ₖ-O)_{g}-R⁴, -C₆H₄(OH) ou -C₆H₃(OH)-((CH₂)ₕ-C₆H₄(OH))_{y},
et R⁵ = époxyde, phénol, oxime, résorcine, polyéthylène glycol et/ou lactame, de préférence caprolactame,
avec 1 = 1 à 3, k = 1 à 3, g = 0 à 12, h = 1 à 2 et y = 1 à 50,
et
R⁴ = H ou alkyle en C₁-C₄.

2. Dispersion aqueuse de résorcine-formaldéhyde-latex selon la revendication 1, **caractérisée en ce que** le carbodiimide correspond à des composés de formule 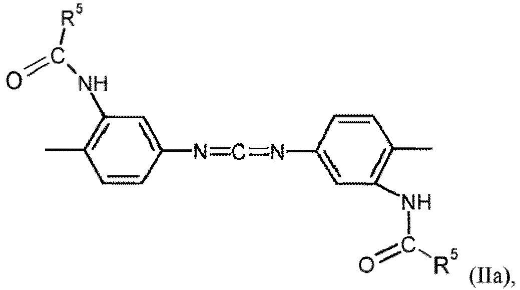 avec R⁵ = époxyde, phénol, oxime, résorcine, polyéthylène glycol et/ou lactame, de préférence caprolactame, 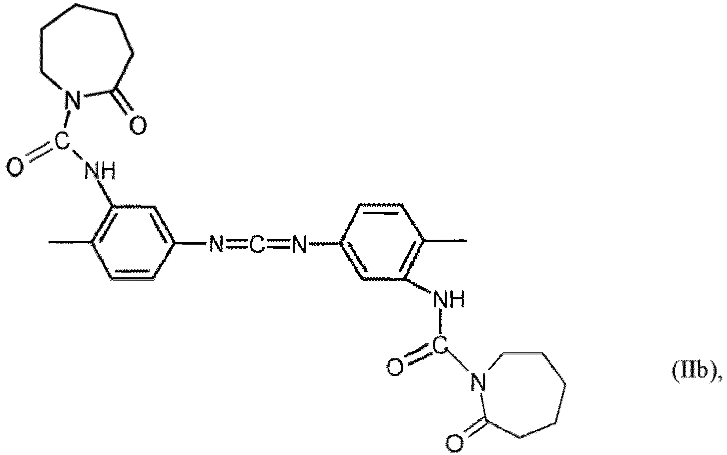 et/ou 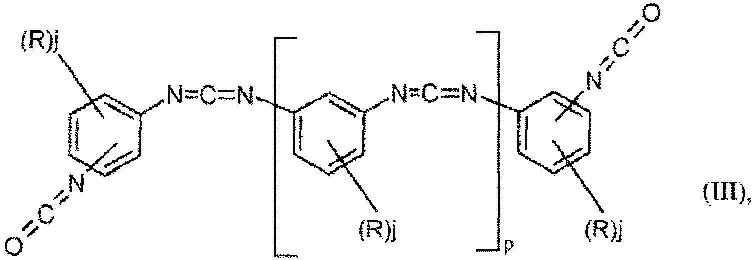 avec R = alkylène en C₁-C₁₈, cycloalkylène en C₅-C₁₈, arylène et/ou aralkylène en C₇-C₁₂, et les j dans la molécule étant identiques ou différents, et signifiant 1 à 5, et avec p = 0 à 500, 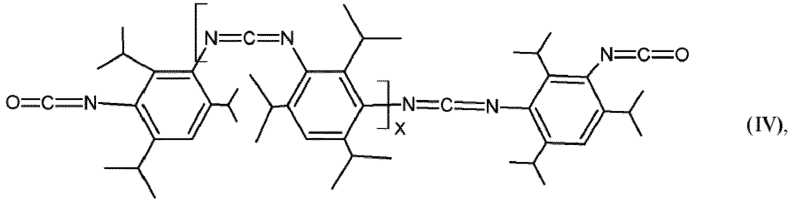 avec x = 1 à 500, et/ou 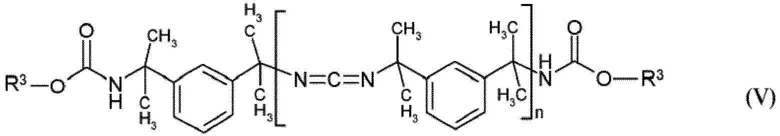
avec n = 1 à 20 ;
et R³ = radical alkyle en C₁-C₆, cycloalkyle en C₆-C₁₀ ou aralkyle en C₇-C₁₂, un radical polyester ou polyamide ou -(CH₂)₁-(O-(CH₂)ₖ-O)_{g}-R⁴,
avec 1 = 1 à 3, k = 1 à 3, g = 0 à 12, et
R⁴ = H ou alkyle en C₁-C₄.

3. Dispersion aqueuse de résorcine-formaldéhyde-latex selon la revendication 1 ou 2, **caractérisée en ce que** la dispersion de résorcine-formaldéhyde-latex est une dispersion des composants individuels résorcine et formaldéhyde et/ou formaldéhyde conjointement avec un précondensat de résorcine et de formaldéhyde et une ou plusieurs dispersions de latex, choisies dans le groupe constitué par : les copolymères de styrène-butadiène carboxylés (latex XSBR), les copolymères de nitrile-butadiène (latex NBR), le polychloroprène (latex CR), les copolymères de pyridine-styrène-butadiène (latex PSBR) et/ou les copolymères d'acrylate pur et/ou de styrène-acrylate (latex d'acrylate) et/ou les latex de copolymères de styrène-butadiène-vinylpyridine.

4. Procédé de fabrication de dispersions aqueuses de résorcine-formaldéhyde-latex selon une ou plusieurs des revendications 1 à 3, **caractérisé en ce qu'**au moins un carbodiimide selon une ou plusieurs des revendications 1 à 3 est incorporé dans la dispersion de résorcine-formaldéhyde-latex.

5. Formulation d'agent adhésif, contenant une dispersion aqueuse de résorcine-formaldéhyde-latex selon une ou plusieurs des revendications 1 à 3 et en outre au moins un agent d'activation.

6. Formulation d'agent adhésif selon la revendication 5, **caractérisée en ce que** l'agent d'activation est au moins un époxyde.

7. Procédé d'amélioration de l'adhésion de fibres de renforcement avec un caoutchouc réticulé et/ou des élastomères, **caractérisé en ce que**
- les fibres sont introduites dans une formulation d'agent adhésif selon la revendication 5 ou 6, puis séchées, ou
- les fibres sont traitées en une ou plusieurs étapes avec un et/ou plusieurs des constituants de la formulation d'agent adhésif selon la revendication 5 ou 6.

8. Procédé d'amélioration de l'adhésion de fibres de renforcement avec des caoutchoucs réticulés ou des élastomères, **caractérisé en ce que** les fibres préactivées sont introduites dans une dispersion aqueuse de résorcine-formaldéhyde-latex selon une ou plusieurs des revendications 1 à 3, puis séchées.

9. Fibres à adhésion améliorée, pouvant être obtenues par mise en contact des fibres prétraitées avec un agent d'activation avec au moins une dispersion aqueuse de résorcine-formaldéhyde-latex selon une ou plusieurs des revendications 1 à 3 ou par mise en contact d'une fibre non prétraitée avec au moins une formulation d'agent adhésif selon la revendication 5 ou 6, puis séchage (fixation) à des températures de 180 à 260 °C.

10. Utilisation des dispersions aqueuses de résorcine-formaldéhyde-latex selon une ou plusieurs des revendications 1 à 3, éventuellement en présence d'agents d'activation, pour l'amélioration de l'adhésion entre des fibres de renforcement et des élastomères dans des pneus, des courroies d'entraînement, des bandes de transport et/ou des tuyaux.
